(19) Europäisches Patentamt
European Patent Office
Office européen des brevets

(11) **EP 2 681 585 B1**

(12) **FASCICULE DE BREVET EUROPEEN**

(45) Date de publication et mention
de la délivrance du brevet:
**01.08.2018 Bulletin 2018/31**

(21) Numéro de dépôt: **12700561.9**

(22) Date de dépôt: **18.01.2012**

(51) Int Cl.:
*G01S 13/90* (2006.01) *G01S 13/538* (2006.01)

(86) Numéro de dépôt international:
**PCT/EP2012/050737**

(87) Numéro de publication internationale:
**WO 2012/116856 (07.09.2012 Gazette 2012/36)**

(54) **PROCEDE DE DETECTION ET DE CARACTERISATION D'UNE CIBLE MOBILE SUR UNE IMAGE RADAR**

VERFAHREN ZUR DETEKTION UND CHARAKTERISIERUNG EINES SICH BEWEGENDEN OBJEKTES AUF EINEM RADARBILD

METHOD FOR DETECTING AND CHARACTERISING A MOVING TARGET ON A RADAR IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.03.2011 FR 1100644**

(43) Date de publication de la demande:
**08.01.2014 Bulletin 2014/02**

(73) Titulaire: **THALES**
**92400 Courbevoie (FR)**

(72) Inventeurs:
• **BOSSER, Luc**
**78120 Rambouillet (FR)**
• **HOTTIER, Vincent**
**78170 La Celle Saint Cloud (FR)**
• **LE FOLL, Didier**
**95390 Saint Prix (FR)**
• **SFEZ, Thierry**
**78851 Elancourt Cedex (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A1-2010/056159      US-A- 5 323 162**
**US-A1- 2004 032 361      US-A1- 2011 006 944**

EP 2 681 585 B1

## Description

L'invention concerne un procédé de détection et de caractérisation (position/vitesse) d'une cible mobile sur une image radar représentant les échos de réflectivité d'une zone éclairée par un faisceau radar. L'invention s'applique notamment à la production d'images SAR-GMTI simultané de haute résolution à partir d'un aéronef équipé d'une antenne radar.

Dans cette représentation SAR-GMTI le « fond d'image » composé des réflecteurs fixes est fourni par une image SAR (Synthetic Aperture Radar) et sur ce fond d'image, la position de chacun des réflecteurs mobiles présents qu'on recherche à détecter (que nous appellerons cible dans la suite de la description par convenance) sur la zone d'intérêt est signalé par un plot, affecté d'un vecteur vitesse correspondant au vecteur vitesse de la cible mobile à l'instant de référence choisi (généralement l'instant central de l'éclairement). Le positionnement de chaque cible mobile est rendu possible par le mode GMTI (« Ground Moving Target Indicator » en anglais).

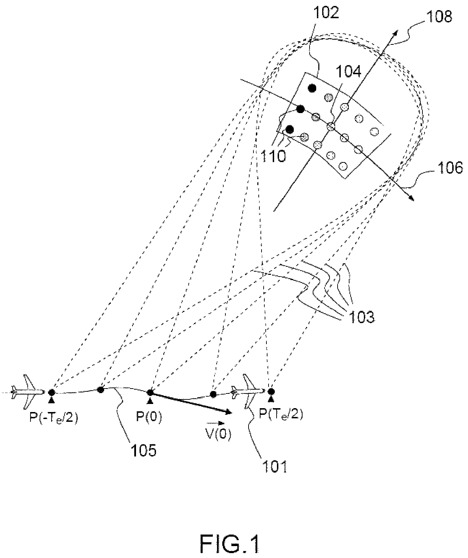

La demanderesse a précédemment déposé la demande de brevet française portant le numéro 10/02083 décrivant un procédé de construction d'images radar focalisées. Pour rappel, la figure 1 illustre une phase d'acquisition de données par un porteur mobile en mode SAR « Spot », c'est à dire un mode dans lequel le faisceau antennaire est asservi en permanence sur la zone à imager. Un radar fixé sur un aéronef 101 illumine une zone imagée 102 durant une durée d'éclairement Te en asservissant le faisceau antennaire 103 sur le centre 104 de ladite zone 102 tout au long de la trajectoire 105 de l'aéronef 101. Cette durée Te est inversement proportionnelle à la résolution visée suivant l'axe transverse 106, la résolution suivant l'axe radial 108 étant quant à elle, inversement proportionnelle à la bande émise par l'antenne radar. La zone imagée 102 est maillée par un quadrillage 110 de cellules pour chacune desquelles on cherche à associer au moins un niveau de réflectivité.

Les échos rétro-diffusés par la zone du sol éclairée par le faisceau radar permettent de créer une image suivant l'axe radial 108 et l'axe transverse 106, respectivement désignés par la suite par les termes d'axe « Distance » 108 et d'axe « Doppler » 106. Cette image, qualifiée par la suite d'image « Distance-Doppler », délivre pour chaque cellule M située à l'intérieur de la zone imagée 102, une valeur de distance $D_M$ et une valeur de fréquence Doppler $f_M$, ces deux valeurs $D_M$ et $f_M$ étant référencées par rapport à un instant donné $t_{ref}$ correspondant, par exemple, à l'écoulement de la moitié de la durée totale de l'éclairement.

En décrivant un secteur angulaire donné autour de la zone imagée 102, le radar collecte périodiquement une série de N profils en distance avec une fréquence de récurrence $f_r$ égale à N/Te. Chacun des N profils en distance offre une représentation mono dimensionnelle de la zone imagée 102 suivant l'axe distance 108. En outre, l'axe distance 108 est divisé en plusieurs cases, chacune desdites cases ayant de préférence une taille légèrement inférieure à la résolution en distance. Pour une case distance donnée, une analyse spectrale suivant l'axe transverse 106 effectuée sur le signal collecté permet de discriminer en Doppler les différents échos contenus à l'intérieur de cette case. Cette analyse spectrale permet de discriminer les échos avec la résolution souhaitée si certaines conditions sont respectées.

La difficulté de la génération d'image SAR-GMTI tient au fait que :

- Dans un mode SAR classique (où les réflecteurs fixes sont positionnés en azimut d'après une mesure de leur fréquence Doppler à un instant de référence), les échos mobiles apparaissent à une position différente de leur position réelle dans la scène imagée : pour ces échos, la mesure de la fréquence Doppler ne peut plus être directement reliée à une position en azimut. En effet, l'expression de la fréquence Doppler de la cible fait non seulement intervenir son azimut (ou plus exactement son angle par rapport au vecteur vitesse du porteur) mais également la vitesse radiale de la cible, information inconnue a priori. En outre, la cible mobile est significativement « défocalisée » : son énergie se dilue sur un nombre important de cases Doppler, voire de cases Distance si la cible est ambiguë en Doppler. Par conséquent, une cible mobile ne bénéficie pas du gain de compression important du traitement SAR (large bande émise et durée d'intégration longue), ce qui rend sa détection délicate, a fortiori si le Doppler (ambigu) de la cible appartient à la plage Doppler (ambiguë) couverte par l'ensemble des réflecteurs fixes éclairés par le faisceau. On parle dans ce cas de cibles « endo clutter ». Ces cibles correspondent aux cibles lentes ou aux cibles rapides dont la vitesse radiale induit un décalage fréquentiel en Doppler correspondant à la fréquence de récurrence du mode SAR (dont la valeur définit l'ambiguïté Doppler).

- Un mode GMTI (Ground Moving Target Indicator) classique permet de détecter et de localiser les cibles mobiles mais ne fournit pas de représentation « résolue en azimut » de la zone de terrain éclairée par le faisceau radar. En effet, les temps d'intégration sont généralement trop courts pour discriminer en azimut les réflecteurs fixes du sol avec une résolution satisfaisante.

Afin de réduire au maximum l'étalement spectral du « clutter de sol » (signaux rétro-diffusés par l'ensemble des réflecteurs fixes du sol éclairés par le faisceau radar) et donc de réduire le nombre de cibles endo-clutter (dont la détection s'avère problématique), les acquisitions GMTI privilégient les géométries d'acquisition dites « dans l'axe » :

le vecteur vitesse du porteur et le vecteur de visée dirigeant le faisceau radar sont colinéaires. Or ces configurations sont justement des configurations prohibées pour le SAR, puisqu'elles interdisent toute discrimination en azimut des réflecteurs fixes éclairés par le faisceau. Dès lors, la solution classique consistant à imager la zone d'intérêt avec un mode SAR (dépointé) pour ensuite y superposer les détections issues d'un mode GMTI pointant dans l'axe possède un inconvénient majeur : elle oblige le porteur à effectuer un virage entre l'acquisition SAR et l'acquisition GMTI.

En résumé, les solutions classiques pour positionner sur une image SAR des plots associés aux cibles mobiles présentes sur la zone d'intérêt consistent généralement à effectuer deux acquisitions séparées : une acquisition SAR et une acquisition GMTI. Les détections issues du mode GMTI sont localisées puis superposées à l'image SAR, en utilisant la localisation que fournit le mode SAR pour chacun des réflecteurs fixes imagés.

Afin d'éluder le problème posé par les cibles endo-clutter, l'acquisition GMTI est effectuée en privilégiant les pointages « dans l'axe », contrairement à l'acquisition SAR qui doit obligatoirement s'effectuer de manière dépointée. Cette configuration est cependant pénalisante en terme de temps puisqu'elle impose au porteur d'effectuer un virage entre les deux acquisitions pour se présenter correctement vis à vis de la zone d'intérêt éclairée par le faisceau.

Si l'acquisition GMTI se fait non plus dans l'axe mais à « iso-dépointage » du SAR, le problème de la détection et de la localisation des cibles endo-clutter se pose. Ce problème est classiquement résolu par des techniques de type STAP (« Space Time Adaptive Process » en anglais). Ces techniques requièrent néanmoins un nombre important de voies de réception pour être efficaces.

De plus, les techniques de type STAP ne résolvent en rien le problème de « focalisation » des cibles et utilisent généralement des durées d'intégration bien inférieures à celles offertes par une acquisition SAR.

Concernant la caractérisation du vecteur vitesse associé à la cible, les modes GMTI classiques permettent au mieux une estimation de la composante radiale de ce vecteur.

Un document WO 2010/056159 A1, un document US 5 323 162 A, un document US 2011/006944 A1 et un document US 2004/032361 A1 décrivent des procédés de détection sur des images SAR. L'objectif de l'invention est de fournir naturellement une représentation SAR de la zone d'intérêt, de détecter les cibles mobiles, y compris les cibles endo-clutter, et de les focaliser et de positionner les cibles sur l'image SAR et de caractériser leur vecteur vitesse.

Plus précisément, l'invention concerne un procédé de détection et de caractérisation d'une cible mobile sur une image radar représentant les échos de réflectivité d'une zone éclairée par un faisceau radar d'un porteur formée par une répétition d'acquisitions radar, ledit procédé étant décrit par les revendications. Selon l'invention le procédé comprend les étapes suivantes :

une première étape d'élimination des échos fixes stationnaires de forte réflectivité mesurés sur l'image radar,
une seconde étape de réduction de la durée d'intégration par extraction de la portion d'éclairement temporelle centrale sur l'image radar,
une troisième étape de focalisation de l'écho de la cible mobile par application d'une correction de la migration de distance et de la migration de Doppler de la cible mobile sur l'image radar,
une quatrième étape d'extraction de la cible mobile de l'image radar,
une cinquième étape de calcul de la position de la cible et des composantes du vecteur vitesse de la cible, dont au moins la composante projetée sur la route du porteur.

Avantageusement, la première étape d'élimination des échos fixes stationnaires comprend les étapes suivantes:

- un abaissement de la réflectivité des échos mobiles consistant à conserver, pour chacun des pixels de l'image radar, la réflectivité minimale sur l'ensemble de la répétition d'acquisitions radar,
- une détection des échos fixes par une opération de seuillage.

Avantageusement, à la troisième étape la correction de la migration distance d'une cible est exécutée en testant plusieurs rangs d'ambiguïté doppler possibles pour la cible.

Avantageusement, à la troisième étape, la correction de la migration Doppler d'une cible est effectuée en testant plusieurs hypothèses de loi de phase quadratique pour compenser la phase résiduelle caractérisant la migration résiduelle en Doppler de la cible mobile, le terme quadratique de cette phase résiduelle étant défini par la formule suivante:

$$\phi_{2,C}(t) = \frac{4\pi}{\lambda} \times \frac{\left(\vec{V} - \vec{V_c}\right)^2 - \left(\frac{\lambda \times f_d C}{2}\right)^2}{2R_c} \times t^2$$

où :

$\vec{V}$ : vecteur vitesse du porteur ;

- $\vec{V_c}$ : vecteur vitesse de la cible ;
- $R_c$ : distance Porteur-Cible ;
- $f_dC$ : fréquence Doppler de la cible ;
- $\lambda$ : longueur d'onde.

Avantageusement, la troisième étape comprend un filtrage des points défocalisés.

Avantageusement, la quatrième étape comprend une opération de seuillage de pixels de l'image radar.

Avantageusement, la cinquième étape comprend le calcul de la composante radiale du vecteur vitesse de la cible mobile d'après la relation suivante :

$$f_d C = \frac{2}{\lambda} \times \vec{U_c} \cdot \left( \vec{V} - \vec{V_c} \right) = \frac{2}{\lambda} \times \vec{U_c} \cdot \vec{V} - \frac{2}{\lambda} \times V_{cR}$$

où :

- $\vec{U_c}$ : vecteur unitaire pointant sur la cible ;
- $V_{cR}$ : composante du vecteur vitesse cible suivant l'axe radial $V_{cR} = \vec{V_c} \cdot \vec{U_c}$

Avantageusement, la cinquième étape comprend le calcul de la composante du vecteur vitesse de la cible mobile projeté suivant la route avion d'après la relation suivante:

$$\phi_{2,C/M}(t) = -\frac{4\pi}{\lambda} \times \frac{V \times V_{cV}}{R_c} \times t^2 \quad - \quad \frac{\lambda \pi}{2R_c} \left( 2f_d M + k_{amb} \times f_r \right) \times k_{amb} \times f_r \times t^2$$

Où,

- $\phi_{2,C/M}(t)$ : la défocalisation résiduelle de ladite cible ;
- $V_{cV}$ : composante du vecteur vitesse cible suivant la route avion ;
- $k_{amb}$ : rang d'ambiguïté Doppler de la cible ;
- $M_c$ : position apparente de la cible, soit la position du point du sol situé à la même distance que la cible ;
- $f_dM$ : fréquence Doppler du point $M_c$ ;
- $f_r$ : fréquence de récurrence.

La phase de détection de cibles mobiles du procédé d'identification selon l'invention sur une image radar peut être mise en oeuvre au moyen d'une seule voie de réception.

De plus, le procédé selon l'invention permet de mettre à profit des durées d'intégration bien supérieures à celles classiquement utilisées par un mode GMTI, afin que les cibles focalisées bénéficient d'un gain de compression (et donc d'un rapport Signal sur Bruit) proche de celui permis par l'intégralité de l'acquisition SAR. Ces rapports Signal à Bruit élevés permettent ainsi d'améliorer la qualité finale de positionnement des cibles sur l'image SAR.

Par ailleurs, le procédé fournit une estimation complète, en deux dimensions, du vecteur vitesse associé à la cible.

L'invention sera mieux comprise et d'autres avantages apparaîtront à la lecture de la description qui va suivre donnée à titre non limitatif et grâce aux figures suivantes :

La figure 1 représente une illustration d'une phase d'acquisition de données par un porteur mobile (art antérieur) ;

La figure 2a illustre une image radar brute en Distance Doppler représentant les cibles mobiles et les échos stationnaires fixes.

La figure 2b illustre une image radar en Distance Doppler après un traitement partiel selon le procédé ayant effacé des échos stationnaires fixes.

La figure 3 représente une image radar en Distance et en temporelle représentant les cibles mobiles.

La figure 4 représente une image radar en Distance Doppler après un traitement partiel selon le procédé ayant réalisé une extraction partielle temporelle des récurrences.

La figure 5 est un organigramme présentant les étapes du procédé selon l'invention.

La figure 6 est un schéma géométrique représentant une acquisition SAR par un porteur visant une cible mobile. La figure 7 est une image radar En Distance Doppler résultant du procédé selon l'invention et représentant une cible mobile identifiée en localisation et en comportement vitesse.

L'invention s'applique aux porteurs mobiles de type aéronefs ou satellite embarquant un dispositif de type radar pour la surveillance d'une zone d'intérêt.

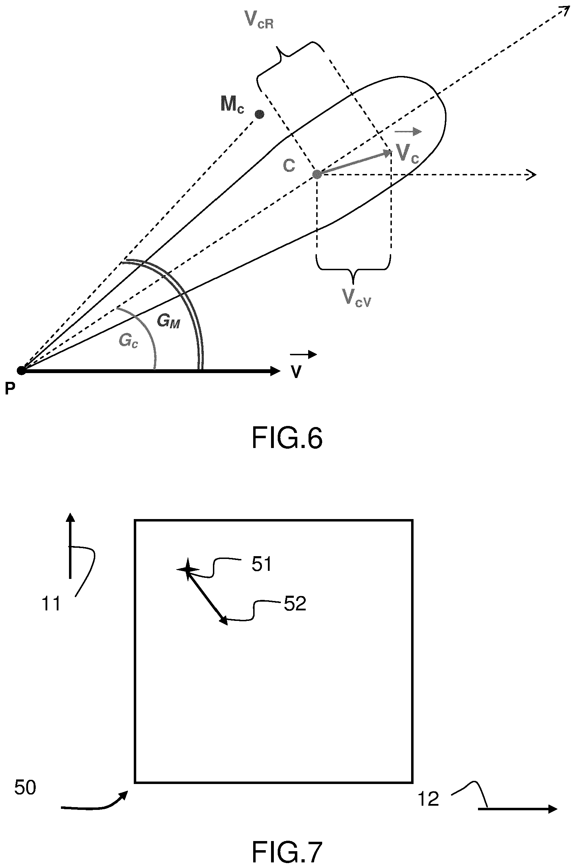

L'invention permet d'obtenir une image synthétique sur laquelle apparaissent les mobiles auxquels est associé un vecteur de déplacement représentant leur direction de déplacement et une quantification de la vitesse de déplacement. Une telle image est obtenue à partir du procédé selon l'invention. La figure 7 est une représentation schématique d'une image radar 50 obtenue par le procédé de l'invention. Cette image représente un écho de cible mobile 21 et le vecteur de déplacement 52. L'image représente en coordonnées 11 la distance par rapport aux voies de réception du porteur et en coordonnées 12 la fréquence Doppler des réflecteurs fixes imagés. Sur cette image, la cible mobile est positionnée à l'endroit du réflecteur fixe caractérisé par le même azimut et la même distance que la cible mobile à l'instant central de l'éclairement.

Le but du procédé selon l'invention est de fournir à partir d'une seule et même acquisition radar une image SAR d'une zone d'intérêt et de superposer à cette image des plots correspondant à la position des cibles mobiles présentes sur la zone imagée.

Plus précisément, ces plots 51 fournissent la position estimée des cibles mobiles à un instant donné (correspondant à l'instant central de l'acquisition). Pour une cible donnée, outre l'information de position, l'invention permet également de délivrer une estimation 52 du vecteur vitesse de la cible au même instant de référence.

Pour chacune des cibles mobiles ainsi détectées, le procédé fournit ensuite une caractérisation en position et en vitesse. L'information de position (référencée par rapport à l'instant central de l'éclairement) est obtenue d'après la Distance porteur-cible lue sur l'image Distance-Doppler et d'après une mesure d'écartométrie angulaire effectuée sur la cible mobile refocalisée. Cette dernière mesure nécessite l'utilisation de deux voies de réception en azimut. La méthode de localisation de la cible mobile ne limite la portée de l'invention. Le vecteur vitesse de la cible (à l'instant central de l'éclairement) est la somme de deux composantes. La composante radiale se calcule d'après la fréquence Doppler de la cible (fréquence déterminée de manière non ambiguë à l'issue de l'étape de détection) et de la position angulaire fournit grâce à l'écartométrie. La composante suivant la route porteur se déduit directement du terme quadratique de phase qui caractérise la migration en Doppler de la cible au cours de l'éclairement. Ce terme quadratique est connu grâce au procédé de l'invention lorsque la loi de phase qui permet de refocaliser la cible mobile a été déterminée.

La forme d'onde utilisée est celle d'un mode SAR de résolution métrique ou sub-métrique utilisant une fréquence de récurrence la plus haute possible, afin d'élargir au maximum la zone claire en Doppler et d'augmenter la largeur de l'ambiguïté Doppler.

Un avantage de l'invention est de permettre la détection les cibles mobiles lentes (dont la fréquence Doppler est comprise dans la plage Doppler couverte par les échos fixes de sol) avec une seule voie de réception. Pour ce faire, l'idée de base consiste à mettre à profit le gain de compression élevé qu'autorise l'acquisition SAR (haute résolution distance et durée d'acquisition longue par rapport à un mode GMTI classique) et à discriminer les échos fixes des échos mobiles d'après la manière dont ils migrent en distance et en Doppler au cours du temps.

Ainsi, sur l'image SAR « brute » générée de manière à focaliser les réflecteurs fixes canoniques de la zone d'intérêt, les échos fixes de forte SER (Surface Equivalente Radar) voient leur énergie concentrée sur une surface très réduite (du fait de la résolution fine). Au contraire, les échos mobiles sont significativement défocalisés (à cause de la durée d'intégration longue du SAR) et voient donc leur énergie diluée sur un nombre important de pixels : ils ne bénéficient pas du gain de compression azimut du SAR.

Le procédé selon l'invention est mis en oeuvre au moyen d'un dispositif radar couplé à des capacités électroniques et de traitement informatique pour une application d'imagerie SAR (idéalement de résolution de classe métrique) et comportant au minimum deux voies de réception en azimut.

Ces capacités électroniques et de traitement informatique pour une application d'imagerie SAR peuvent être embarqué sur le porteur ou localisé sur une station éloignée. Dans ce dernier cas, le porteur possède également des moyens de transmissions des données mesurées vers la station éloignées. Dans le cas d'une application pour un aéronef comme illustrée par la figure 1, les deux voies de réception peuvent être par exemple deux panneaux antennaires positionnés sur une surface du porteur faisant face à une direction non colinéaire à la trajectoire du porteur. Ceci afin de pouvoir discriminer en Doppler (et donc en azimut) les échos fixes du sol éclairés par le faisceau radar et d'être ainsi en mesure de constituer une image SAR.

L'acquisition d'images radar effectuée comme illustré par la figure 1 permet d'obtenir une image 10 Distance 11-Doppler 12 brute de la zone d'intérêt. Sur cette image 10 Distance-Doppler brute de la zone d'intérêt, les deux cibles 13 et 14 apparaissent significativement défocalisées. En outre, comme ces deux cibles 13 et 14 ont été affectées d'une vitesse radiale non nulle, leur position sur l'image SAR ne correspond pas à leur positionnement réel au sol. Cependant, à titre illustratif, on a choisi deux valeurs de vitesse radiale significativement différentes pour ces deux cibles synthétiques :

La première cible 13 est affectée d'une vitesse radiale très lente, qui la rend non ambiguë en Doppler : la fréquence Doppler de la cible (ou plus exactement la plage Doppler couverte par la cible sur l'image) est lue de manière correcte sur l'image SAR Distance-Doppler. Pour un réflecteur donné (fixe ou mobile), la connaissance de la fréquence Doppler à l'instant central de l'éclairement permet de déterminer sans erreur le terme linéaire de la migration distance associé à ce réflecteur au cours de l'éclairement. Par conséquent, dès lors que la cible est non ambiguë en Doppler, le traitement SAR lui applique au premier ordre une correction de migration distance correcte. Le terme résiduel de migration distance ne contient plus de terme linéaire et s'étale donc sur un nombre très restreint (voire négligeable) de cases distance. Ce phénomène est visible sur l'image SAR ci-après, où la cible mobile ponctuelle 13 non ambiguë est quasiment concentrée à l'intérieur d'une seule case distance.

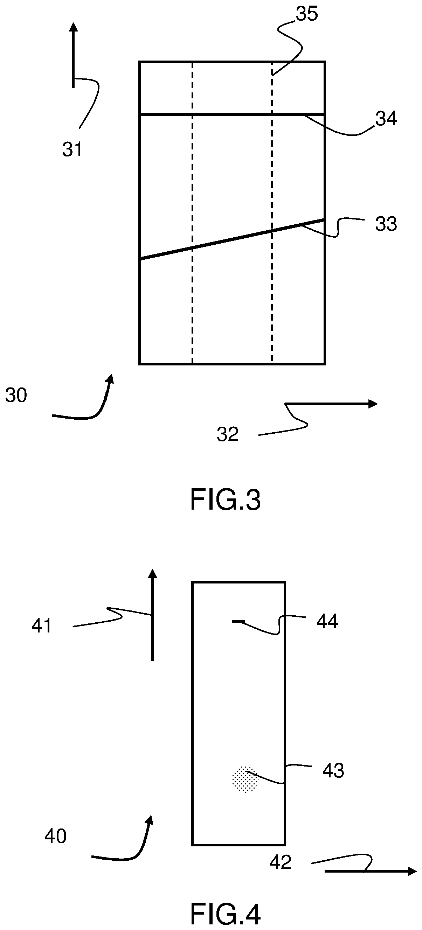

La seconde cible 14 est au contraire affectée d'une vitesse radiale rapide, qui la rend ambiguë en Doppler : la fréquence Doppler de la cible lue sur l'image SAR (Distance-Doppler) 10 diffère de la véritable fréquence Doppler de la cible. Cette différence est un multiple de la fréquence de récurrence de la forme d'onde du mode SAR. Par conséquent, contrairement à la cible non ambiguë, la cible ambiguë reste entachée d'une migration résiduelle en distance très importante, étalée sur un nombre significatif de cases Distance. Néanmoins, la connaissance du rang d'ambiguïté de la cible suffit à déterminer le terme linéaire de cette migration résiduelle en distance. Ce phénomène est visible sur le Signal Distance-Temps obtenu en appliquant à l'image Distance-Doppler 10 une FFT (fonction de transformée de Fourrier) inverse suivant l'axe Doppler. Ce signal Distance -Temps est représenté par la figure 3.

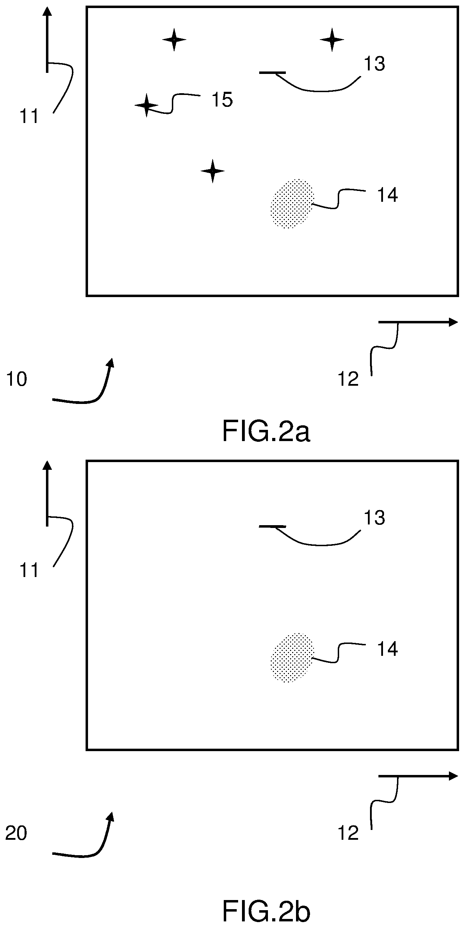

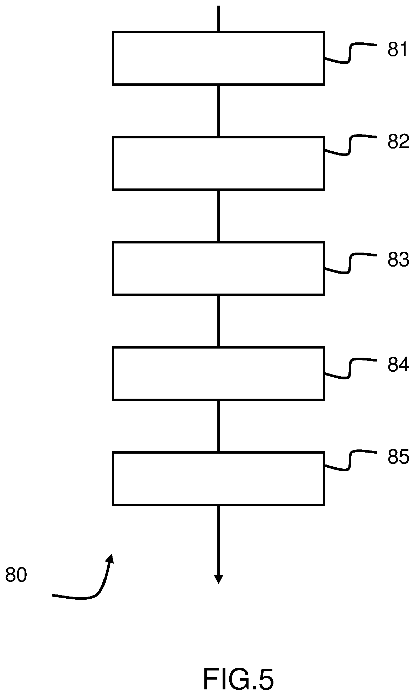

A partir d'une image Distance-Doppler brute comme illustrée par la figure 2a, le procédé 80 représenté schématiquement à la figure 5 comprend une première étape 81 d'élimination des échos fixes stationnaires 15 de forte réflectivité mesurés sur l'image radar 10.

Sur l'image SAR Distance-Doppler brute 10, les échos fixes 15 de SER significative éclairés par le lobe principal du faisceau antenne sont focalisés et bénéficient du gain de compression élevé du traitement SAR. Ils sont donc au-dessus du niveau moyen du « fond d'image » (composé dans l'exemple choisi de gazon et de bitume) et se concentrent sur un nombre de pixels restreint en comparaison du nombre total de pixels que couvre la zone éclairée par le lobe principal.

La contribution de ces échos peut donc être soustraite en mettant à zéro les pixels de l'image Distance-Doppler où se concentre leur énergie. Cette opération de mise à zéro, communément appelée blanking par le terme anglo-saxon, d'un nombre limité de pixels ne dégrade pas significativement les signaux issus des échos mobiles dans la mesure où ces échos sont défocalisés et voient donc leur énergie diluée sur un très grand nombre de pixels.

La détection des échos fixes fortement réfléchissant ne se résume pas à un simple seuillage sur l'image Distance-Doppler. Un tel traitement aurait pour effet indésirable de détecter (et supprimer) également les échos mobiles de très forte SER ou dont la défocalisation n'est pas suffisamment marquée (cibles lentes par exemple).

Une solution efficace est décrite dans une demande de brevet de la demanderesse déposée en 2001 portant le numéro de publication FR2833713. Cette méthode consiste à appliquer au préalable une opération de filtrage des points non stationnaires sur l'image Distance-Doppler brute 10, afin de filtrer les différents échos mobiles et les empêcher de dépasser le seuil de détection.

Le principe d'un tel filtrage consiste dans un premier temps à appliquer des différentes corrections nécessaires à l'obtention d'une image SAR focalisée en tout point. Un réflecteur stationnaire est vu à une distance fixe et à une fréquence Doppler fixe tout au long de l'éclairement. Par conséquent, la génération d'un « film » composé d'images SAR issues d'un découpage du temps d'éclairement complet en sous-éclairements permet de mettre en évidence la non-stationnarité. Sur chacune des images du film, un réflecteur stationnaire 15 est vu à une position Distance-Doppler identique et avec la même réflectivité. Au contraire, un réflecteur non stationnaire 13 ou 14 (en particulier un réflecteur mobile) sera positionné différemment suivant les images et/ou fluctuera en amplitude.

Par conséquent, le filtrage des points non stationnaires 13 ou 14 consiste à conserver, pour chacun des pixels, la réflectivité minimale sur l'ensemble des images Distance-Doppler du film.

L'amplitude des échos non-stationnaires est ainsi significativement atténuée. En revanche, la résolution azimutale de cette image filtrée est dégradée puisque la durée d'un sous-éclairement est réduite par rapport à l'éclairement complet.

Afin de conserver la résolution azimutale optimale correspondant à l'éclairement complet, une opération de recherche de valeur minimale est finalement effectuée entre cette dernière image et l'image brute pleine résolution.

L'image de la figure 2B représente un schéma d'une image radar obtenue à la suite de la première étape du procédé. Sur cette image 20 Distance 11 - Doppler 12, les échos fixes stationnaires 15 ont été effacés et seuls restent les échos non stationnaires 13 et 14 représentant les cibles mobiles.

Le procédé comprend une seconde étape 82 de réduction de la durée d'intégration. La réduction de la durée d'intégration présente un intérêt double. Premièrement, l'hypothèse suivant laquelle la cible suit un mouvement rectiligne uniforme devient plus facilement vérifiable et deuxièmement la charge de calcul décroît significativement. La taille des signaux est restreinte et le nombre de lois de phase à tester lors des étapes suivantes pour la correction des migration Doppler est également réduit puisque proportionnel au carré de la durée d'intégration (la réduction de la durée d'intégration permet à la fois de limiter la migration Doppler résiduelle et de la caractériser avec une taille de case Doppler plus grossière).

Cette réduction de la durée d'intégration s'effectue de la manière suivante :

- Retour dans le domaine temporel en appliquant une FFT inverse suivant l'axe Doppler sur l'image Distance-Doppler 20 débarrassée des échos fixes de SER significative,
- Dépondération temporelle : la mise à zéro des échos forts s'effectue sur une image Distance-Doppler pondérée, afin de concentrer l'énergie de ces échos sur un nombre minimal de pixel sans dissipation parasite d'énergie dans les lobes secondaires. Une fois revenu dans le domaine temporel, l'effet de cette pondération doit être supprimé.
- Extraction de la portion temporelle centrale.

L'image de la figure 3 représente une image 30 Distance 31-Temps 32. Les échos mobiles à vitesse radiale lente sont représentés par la ligne 34 et les échos mobiles à vitesse de déplacement plus élevée sont représentés par la ligne 33.

L'image 40 de la figure 4 représente un schéma de l'image Distance 41 - Doppler 42 de résolution azimutale dégradée obtenue en effectuant une FFT sur la durée d'intégration réduite correspondant à la portion temporelle centrale extraite. Sur cette image 40, la défocalisation des cibles 43 et 44 couvre désormais un nombre de pixels significativement réduit par rapport à l'image Distance-Doppler 10 brute originale.

Le procédé 80 comprend ensuite une troisième étape 83 de focalisation de l'écho de la cible mobile par un calcul de correction de la migration de distance et de la migration de Doppler de la cible mobile sur l'image radar.

La focalisation consiste à re concentrer sur un nombre le plus limité possible de cases Distance-Doppler l'énergie du signal rétrodiffusé par une cible, afin de permettre la détection sur un bruit résiduel composé soit de bruit thermique uniquement (zone claire), soit de bruit thermique et d'échos faiblement réflectifs et non-focalisés (zone endo-clutter).

La focalisation permet à la cible de bénéficier d'un gain de compression important, à la fois en distance (large bande émise) et en Doppler (durée d'intégration longue), a condition de réussir à corriger sa migration résiduelle en distance et sa migration résiduelle en Doppler.

La correction du terme linéaire de la migration en distance de la cible au cours de l'acquisition est faite initialement lors de la génération de l'image SAR : la loi de correction appliquée est alors celle appliquée à un écho fixe qui, à l'instant central de l'éclairement est situé à la même distance que l'écho mobile et présente la même fréquence Doppler ambiguë que la cible mobile.

Comme le terme linéaire de la migration distance dépend uniquement de la fréquence Doppler (non ambiguë) de l'écho à l'instant de référence (ici instant central de l'éclairement), la migration résiduelle en distance de la cible peut donc être entièrement caractérisée par la seule connaissance de son rang d'ambiguïté en Doppler.

On rappelle succinctement la notion de rang d'ambiguité Doppler. A cause de l'échantillonnage du signal avec une fréquence Fr, il est impossible de faire la distinction entre un signal de fréquence Doppler fd et un signal de fréquence Doppler fd + Fr, ou fd + 2Fr, ou fd+ 3Fr, etc... On parle d'ambiguïté Doppler et de rang d'ambiguité Doppler. Cependant, dans le cadre strict de l'imagerie SAR, ceci ne pose pas problème. En effet, comme la géométrie du problème est connue (position du porteur, vitesse du porteur, direction de pointage du faisceau, position des points du sol éclairés par le faisceau radar,...), on connait le rang d'ambiguité des échos fixes du sol éclairés par le faisceau radar. En revanche, pour un écho mobile dont on ignore apriori la vitesse, ce rang d'ambiguité est apriori inconnu. Par défaut, lorsqu'on génère l'image SAR, on fait l'hypothèse que les échos reçus ont une fréquence Doppler comprise entre fd0 - Fr/2 et fd0 + Fr/2, où fd0 désigne la fréquence Doppler du point central de la zone imagée (cette fréquence Doppler fd0 est connue d'après la géométrie d'acquisition).

Il est par conséquent possible de corriger le terme linéaire de la migration résiduelle en distance de la cible en effectuant différentes hypothèses sur son rang d'ambiguïté. Pour les classes de vitesses recherchées et avec un mode SAR travaillant avec une fréquence de récurrence élevée, on peut se limiter aux rangs +1 et -1.

Sur l'image non ambiguë, la cible non ambiguë en Doppler est déjà correctement corrigée. Sa migration résiduelle en distance n'excède pas une case Distance.

En testant le rang d'ambiguïté 1, c'est cette fois la cible ambiguë qui voit son énergie re concentrée sur une plage Distance restreinte : sa migration distance résiduelle est inférieure à la taille de la case. Pour une résolution radiale de classe métrique ou légèrement submétrique, et après réduction de la durée d'intégration, on peut considérer que le terme quadratique qui caractérise la migration distance résiduelle est inférieur à la taille de la case distance.

A ce stade du procédé, pour une cible mobile donnée, il existe une image Distance-Doppler (associée à une valeur de rang d'ambiguïté en Doppler) pour laquelle la migration en distance de la cible a été compensée. Sur cette image, la migration résiduelle de la cible se résume désormais à une migration en Doppler. Grâce à la réduction de la durée d'intégration, cette migration résiduelle Doppler peut se caractériser par un terme quadratique de phase dans le domaine temporel (les termes d'ordres supérieurs induisent une défocalisation négligeable).

La dernière étape pour reconcentrer l'énergie de la cible consiste donc à tester différentes hypothèses de « largeur » de défocalisation, en faisant varier le terme quadratique de l'erreur de phase résiduelle dans le domaine temporel.

Ainsi, l'image Distance-Doppler sur laquelle la cible non ambiguë a été refocalisée appartient à la série d'images associée au rang d'ambiguïté zéro. Pour la cible ambiguë en doppler, l'image sur laquelle l'énergie de la cible a été concentrée sur un nombre limité de pixels Distance-Doppler appartient à la série d'images associée au rang +1.

Le procédé 80 comprend ensuite une quatrième étape 84 d'extraction de la cible mobile de l'image radar. Après focalisation, les cibles bénéficient d'un gain de compression élevé et peuvent donc être détectées par simple seuillage sur un bruit résiduel composé dans le pire cas d'échos de sol faiblement réflectifs et défocalisés. Néanmoins, afin d'éviter les détections parasites d'une même cible sur plusieurs images distance-Doppler, il est préférable d'appliquer au préalable sur chacune de ces images un filtrage des points non stationnaires (identique à celui utilisé pour filtrer les échos de sol fortement réflectifs). A l'issue de ce filtrage, seules les cibles focalisées sont conservées.

Le procédé 80 comprend ensuite une cinquième étape 85 de calcul de la position de la cible et des composantes du vecteur vitesse de la cible, en particulier de la composante projetée sur la route du porteur. La figure 6 est un schéma représentant la géométrie d'acquisition entre un porteur et la cible mobile et les vecteurs vitesse de la cible mobile et du porteur. Dans un premier temps on récapitule les notations suivantes :

Toutes les grandeurs (positions, vitesses, gisements,...) sont référencées par rapport à l'instant central de l'éclairement :

- $P$ : position du porteur
- $\vec{V}$ : vecteur vitesse du porteur
- $C$ : position de la cible
- $\vec{V}_c$ : vecteur vitesse de la cible
- $R_c$ : distance Porteur-Cible : $R_c = \|\vec{PC}\|$

$$\vec{U}_c = \frac{\vec{PC}}{\left\|\vec{PC}\right\|}$$

- $\vec{U}_c$ : vecteur unitaire pointant sur $C$ :
- $V_{cR}$ : composante du vecteur vitesse cible suivant l'axe radial : $V_{cR} = \vec{V}_c . \vec{U}_c$

$$V_{cV} = \vec{V}_c . \frac{\vec{V}}{V}$$

- $V_{cV}$ : composante du vecteur vitesse cible suivant la route avion :
- $G_c$ : gisement de la cible
- $S_c$ site de la cible
- $f_d C$ : fréquence Doppler de la cible
- $f_d 0$ : fréquence Doppler du point du sol situé au centre du faisceau
- $f_r$ : fréquence de récurrence du mode SAR/GMTI
- $M_c$ : position « apparente » de la cible = position du point du sol situé à la même distance que la cible et dont

le Doppler non ambigu est compris entre $f_d 0 - f_r/2$ et $f_d 0 + f_r/2$,
le Doppler ambigu est égal au Doppler ambigu de la cible.

- $G_M$ : gisement « apparent » de la cible = gisement du point $M_c$
- $f_d M$ : fréquence Doppler du point $M_c$
- $k_{amb}$ : rang d'ambiguïté Doppler de la cible C : $k_{amb} = (f_d C - f_d M)/f_r$
- $T_e$ : durée d'éclairement (durée d'intégration pour le SAR)

L'instant de référence t=0 correspond à l'instant central de l'éclairement : $t \in \left[ -\dfrac{T_e}{2}, -\dfrac{T_e}{2} \right]$. la distance Porteur-Cible au cours du temps s'écrit :

$$\left\|P(t)\vec{C}(t)\right\| = \left\|P(t)\vec{P}(0) + P(0)\vec{C}(0) + C(0)\vec{C}(t)\right\| = \left\|-\vec{V}\times t + R_c \times \vec{U}_c + \vec{V}_c \times t\right\| = \left\|-\left(\vec{V} - \vec{V}_c\right)\times t + R_c \times \vec{U}_c\right\|$$

A partir de là :

$$\left\|P(t)\vec{C}(t)\right\| = \sqrt{\left(-\left(\vec{V} - \vec{V}_c\right)\times t + R_c \times \vec{U}_c\right)^2} = \sqrt{R_c^2 - 2R_c\,\vec{U}_c\cdot\left(\vec{V} - \vec{V}_c\right)\times t + \left(\vec{V} - \vec{V}_c\right)^2 \times t^2}$$

soit :

$$\left\|P(t)\vec{C}(t)\right\| = R_c \sqrt{1 - 2\frac{\vec{U}_c\cdot\left(\vec{V} - \vec{V}_c\right)}{R_c}\times t + \frac{\left(\vec{V} - \vec{V}_c\right)^2}{R_c^2}\times t^2}$$

(expression de la forme $\sqrt{1+x}$ avec $x \ll 1$)

$$\sqrt{1+x} = 1 + \frac{1}{2}x - \frac{1}{8}x^2 + O\!\left(x^3\right)$$

Par développement limité :
Par conséquent :

$$\left\|P(t)\vec{C}(t)\right\| = R_c - \vec{U}_c\cdot\left(\vec{V} - \vec{V}_c\right)\times t + \frac{\left(\vec{V} - \vec{V}_c\right)^2 - \left(\vec{U}_c\cdot\left(\vec{V} - \vec{V}_c\right)\right)^2}{2R_c}\times t^2 + O\!\left(t^3\right)$$

A l'instant $t = 0$, la fréquence Doppler de la cible mobile s'écrit :

$$f_d C = \frac{2}{\lambda}\times \vec{U}_c\cdot\left(\vec{V} - \vec{V}_c\right).$$

Finalement, la position de la cible est obtenue par la formule suivante :

$$\left\|P(t)\vec{C}(t)\right\| = R_c - \frac{\lambda \times f_d C}{2}\times t + \frac{\left(\vec{V} - \vec{V}_c\right)^2 - \left(\frac{\lambda \times f_d C}{2}\right)^2}{2R_c}\times t^2 + O\!\left(t^3\right)$$

La phase du signal rétro-diffusé par la cible C au cours du temps s'écrit :

$$\phi_C(t) = \frac{4\pi}{\lambda}\left\|P(t)\vec{C}(t)\right\|$$

La migration Doppler de la cible C au cours de l'éclairement est caractérisée par le terme quadratique de $\phi_C(t)$.
Ce terme quadratique s'écrit donc :

$$\phi_{2,C}(t) = \frac{4\pi}{\lambda} \times \frac{\left(\vec{V}-\vec{V_c}\right)^2 - \left(\frac{\lambda \times f_d C}{2}\right)^2}{2R_c} \times t^2$$

Lors de la génération de l'image Distance-Doppler (correction des migrations distance et des migrations Doppler avec des lois de corrections adaptées aux réflecteurs fixes de la zone imagée), la correction de migration appliquée à la cible mobile est identique à la correction appliquée au réflecteur fixe Mc. Pour rappel Mc désigne la position « apparente » de la cible

La migration Doppler de Mc est caractérisée par la phase quadratique suivante :

$$\phi_{2,M}(t) = \frac{4\pi}{\lambda} \times \frac{\left(\vec{V}\right)^2 - \left(\frac{\lambda \times f_d M}{2}\right)^2}{2R_c} \times t^2$$

où

$$R_c = \left\|\vec{PC}\right\| = \left\|\vec{PM}_c\right\|$$

Par conséquent, sur l'image Distance-Doppler finale (où chaque réflecteur fixe est focalisé), la défocalisation résiduelle de la cible mobile est caractérisée par le terme de phase :

$$\phi_{2,C/M}(t) = \phi_{2,C}(t) - \phi_{2,M}(t)$$

La défocalisation résiduelle s'écrit donc :

$$\phi_{2,C/M}(t) = \frac{4\pi}{\lambda} \times \frac{\left(\vec{V}-\vec{V_c}\right)^2 - \left(\vec{V}\right)^2}{2R_c} \times t^2 \quad - \quad \frac{\lambda\pi}{2R_c}\left(2f_d M + k_{amb} \times f_r\right) \times k_{amb} \times f_r \times t^2$$

Si l'on suppose que la cible mobile se déplace beaucoup moins vite que le porteur, cette expression devient finalement :

$$\phi_{2,C/M}(t) = -\frac{4\pi}{\lambda} \times \frac{V \times V_{cV}}{R_c} \times t^2 \quad - \quad \frac{\lambda\pi}{2R_c}\left(2f_d M + k_{amb} \times f_r\right) \times k_{amb} \times f_r \times t^2$$

| **Défocalisation liée à la composante « route avion » du vecteur vitesse de la cible** | **Défocalisation liée au rang d'ambiguïté Doppler de la cible (terme compensable en faisant une hypothèse sur la valeur du rang d'ambiguïté)** |
|---|---|

A l'issue de l'étape 104 d'extraction des cibles, les caractéristiques suivantes sont connues pour chacune des cibles détectées :
Distance Porteur-Cible $R_c$ à l'instant central de l'éclairement.

Fréquence Doppler non ambiguë

Fréquence Doppler non ambiguë $f_d C = f_d M + k_{amb} \times f_r$.

Première caractérisation de la loi de phase $\phi_{2,C/M}(t)$ sur une durée d'intégration réduite par rapport à la durée d'éclairement complète. Cette première caractérisation peut être affinée en augmentant la durée d'intégration. Ainsi, l'étape de refocalisation de la cible est réitérée sur une durée d'intégration plus longue. On peut ainsi améliorer la précision sur l'estimation du terme quadratique de phase : pour une cible donnée, la première estimation grossière effectuée sur une durée d'intégration restreinte permet d'initialiser la focalisation « fine ». Les nouveaux tests de focalisation s'effectuent avec un pas plus fin (suivant un nombre d'hypothèses réduit) autour de la valeur initiale. A l'issue de cette étape, la focalisation finale de la cible peut être atteinte par utilisation d'un autofocus local de type PGA (« Phase gradient autofocus » *en anglais).* On peut ainsi accéder à la connaissance fine de la loi de phase de la cible mobile au cours du temps.

La localisation angulaire de la cible peut ensuite être estimée grâce une mesure d'écartométrie angulaire en azimut (utilisant deux voies de réception), effectuée sur la cible mobile refocalisée. Le gain de compression important obtenu grâce à la focalisation de la cible sur une durée d'intégration longue avec une résolution radiale fine permet de réduire l'écart type du bruit sur cette mesure d'écartométrie angulaire.

Par conséquent, à une cinquième étape 105, le procédé calcule la position de la cible et les composantes du vecteur vitesse de la cible en fonction au moins de la route du porteur sur l'image radar et de la composante radiale porteur cible.

A ce stade, il est donc possible d'estimer le vecteur $\vec{U}_c$ pointant vers la cible mobile à l'instant central de l'éclairement, d'après la connaissance de la localisation angulaire de la cible, la distance $R_c$, l'altitude relative Porteur-Cible et les attitudes avion et les informations liées au pointage antenne.

Une fois estimée la position de la cible à l'instant central de l'éclairement, il est également possible de caractériser son vecteur vitesse :

La connaissance de la position de la cible et de sa fréquence Doppler non ambiguë permet d'estimer la composante radiale de son vecteur vitesse, d'après la relation suivante :

$$f_d C = \frac{2}{\lambda} \times \vec{U}_c . \left( \vec{V} - \vec{V}_c \right) = \frac{2}{\lambda} \times \vec{U}_c . \vec{V} - \frac{2}{\lambda} \times V_{cR}$$

La connaissance de la phase de la cible au cours du temps permet de remonter à la composante $V_{cV}$ du vecteur vitesse projeté suivant la route avion, en exploitant la relation suivante :

$$\phi_{2,C/M}(t) = -\frac{4\pi}{\lambda} \times \frac{V \times V_{cV}}{R_c} \times t^2 \quad - \quad \frac{\lambda\pi}{2R_c}(2f_d M + k_{amb} \times f_r) \times k_{amb} \times f_r \times t^2$$

Au final, on obtient donc une image SAR sur laquelle sont repositionnées les différentes cibles mobiles détectées, affectées chacune d'un vecteur vitesse. Ce résultat est illustré par l'image schématique Distance-Doppler 50 de la figure 7.

## Revendications

**1.** Procédé (80) de détection et de caractérisation d'une cible mobile (13; 14) sur une image SAR représentant les échos de réflectivité d'une zone éclairée par un faisceau radar d'un porteur (101) formée par une répétition d'acquisitions radar (103), qui comprend les étapes suivantes :

- une première étape (81) dans laquelle on élimine les échos fixes stationnaires de forte réflectivité mesurés sur l'image radar, ladite première étape comprenant les étapes suivantes :

- abaissement de la réflectivité des échos mobiles consistant à conserver, pour chacun des pixels de l'image radar, la réflectivité minimale sur l'ensemble de la répétition d'acquisitions radar,
- détection des échos fixes par une opération de seuillage,

- une seconde étape (82) dans laquelle on réduit la durée d'intégration par extraction de la portion d'éclairement temporelle centrale sur l'image radar,

- une troisième étape (83) dans laquelle on focalise l'écho de la cible mobile par application d'une correction de la migration de distance et de la migration de Doppler de la cible mobile sur l'image radar,
- une quatrième étape (84) dans laquelle on extrait la cible mobile de l'image radar, ladite quatrième étape comprenant une opération de seuillage des pixels de l'image radar,
- une cinquième étape (85) dans laquelle on calcule la position de la cible et les composantes du vecteur vitesse de la cible, dont au moins la composante projetée sur la route du porteur, obtenue selon la relation suivante:

$$\phi_{2,C/M}(t) = -\frac{4\pi}{\lambda} \times \frac{V \times V_{cV}}{R_c} \times t^2 \quad - \quad \frac{\lambda\pi}{2R_c}(2f_dM + k_{amb} \times f_r) \times k_{amb} \times f_r \times t^2$$

où:

- $t$ représente le temps ;
- $\lambda$ : longueur d'onde ;
- $R_c$ : la distance entre ledit porteur et ladite cible ;
- $\phi_{2,C/M}(t)$ : la défocalisation résiduelle de ladite cible ;
- $V_{cV}$ : composante du vecteur vitesse cible suivant la route avion ;
- $k_{amb}$ : rang d'ambiguïté Doppler de la cible ;
- $M_c$ : position apparente de la cible, soit la position du point du sol situé à la même distance que la cible ;
- $f_dM$ : fréquence Doppler du point $M_c$ ;
- $f_r$ : fréquence de récurrence.

2. Procédé selon la revendication 1, **caractérisé en ce qu'**à la troisième étape (83) la correction de la migration distance d'une cible est exécutée en testant plusieurs rangs d'ambiguïté doppler possibles pour la cible.

3. Procédé selon la revendication 1, **caractérisé en ce qu'**à la troisième étape (83) la correction de la migration Doppler d'une cible est effectuée en testant plusieurs hypothèses de loi de phase quadratique pour compenser la phase résiduelle caractérisant la migration résiduelle en Doppler de la cible mobile, le terme quadratique de cette phase résiduelle étant défini par la formule suivante:

$$\phi_{2,C}(t) = \frac{4\pi}{\lambda} \times \frac{\left(\vec{V} - \vec{V}_c\right)^2 - \left(\frac{\lambda \times f_dC}{2}\right)^2}{2R_c} \times t^2,$$

où :

- $V$ : vecteur vitesse du porteur
- $V_c$ : vecteur vitesse de la cible
- $R_c$ : distance Porteur-Cible :
- $f_dC$ : fréquence Doppler de la cible

4. Procédé selon l'une quelconque des revendications 2 et 3, **caractérisé en ce que** la troisième étape (83) comprend un filtrage des points défocalisés.

5. Procédé selon la revendication 1, **caractérisé en ce que** la cinquième étape (85) comprend le calcul de la composante radiale du vecteur vitesse de la cible mobile d'après la relation suivante :

$$f_dC = \frac{2}{\lambda} \times \vec{U}_c \cdot \left(\vec{V} - \vec{V}_c\right) = \frac{2}{\lambda} \times \vec{U}_c \cdot \vec{V} - \frac{2}{\lambda} \times V_{cR}$$

où :

$V_{cR}$ : composante du vecteur vitesse cible suivant l'axe radial ;

$U_c$ : vecteur unitaire pointant sur la cible.

**Patentansprüche**

1. Verfahren (80) zur Detektion und Charakterisierung eines sich bewegenden Objekts (13; 14) auf einem SAR-Bild, welches die Reflektivitätsechos einer von einem Radarträgerstrahl (101) beleuchteten Zone, die durch eine Wiederholung von Radarerfassungen (103) entsteht, darstellt, folgende Schritte beinhaltend:

   - einen ersten Schritt (81), bei welchem feste, stationäre Echos mit starker Reflektivität, welche auf dem Radarbild gemessen werden, beseitigt werden, wobei der erste Schritt folgende Schritte beinhaltet:

      - Verringern der Reflektivität der mobilen Echos, darin bestehend, für jeden Pixel des Radarbildes die minimale Reflektivität über die gesamte Wiederholung der Radarerfassung beizubehalten,
      - Detektion der festen Echos durch einen Schritt der Schwellenwertbestimmung,

   - einen zweiten Schritt (82), bei welchem man die Integrationsdauer durch Extraktion des zeitlichen zentralen Beleuchtungsabschnitts auf dem Radarbild verringert,
   - einen dritten Schritt (83), bei welchem man das Echo des beweglichen Objekts durch Anwenden einer Korrektur der Abstandsmigration und der Doppler-Migration des beweglichen Objekts auf dem Radarbild fokussiert,
   - einen vierten Schritt (84), bei welchem man das mobile Objekt aus dem Radarbild extrahiert, wobei der vierte Schritt einen Schritt der Schwellenwertbestimmung der Pixel des Radarbildes beinhaltet,
   - einen fünften Schritt (85), bei welchem man die Position des Objekts und die Komponenten des Geschwindigkeitsvektors des Objekts berechnet, darunter mindestens eine auf die Route des Trägers projizierte Komponente, welche anhand des folgenden Verhältnisses erzielt wird:

$$\phi_{2,C/M}(t) = -\frac{4\pi}{\lambda} \times \frac{V \times V_{cV}}{R_c} \times t^2 \quad - \quad \frac{\lambda\pi}{2R_c}\left(2f_dM + k_{amb} \times f_r\right) \times k_{amb} \times f_r \times t^2$$

wobei:

   - t die Zeit darstellt;
   - $\lambda$: Wellenlänge;
   - $R_c$: Abstand zwischen dem Träger und dem Objekt;
   - $\phi_{2,C/M}(t)$: Rest-Defokussierung des Objekts;
   - $V_{cV}$: Geschwindigkeitsvektor des Objekt entsprechend der Route des Flugzeugs;
   - $k_{amb}$: Doppler-Mehrdeutigkeitsrang des Objekts;
   - $M_c$: scheinbare Position des Objekts, d. h. die Position des Punktes am Boden, welcher im gleichen Abstand befindlich ist wie das Objekt;
   - $f_dM$: Doppler-Frequenz des Punktes $M_c$;
   - $f_r$: Wiederholungsfrequenz.

2. Verfahren nach Anspruch 1, **dadurch gekennzeichnet, dass** im dritten Schritt (83) die Korrektur der Abstandsmigration eines Objekts durch Testen mehrerer möglicher Doppler-Mehrdeutigkeitsränge für das Objekt erfolgt.

3. Verfahren nach Anspruch 1, **dadurch gekennzeichnet, dass** im dritten Schritt (83) die Korrektur der Doppler-Migration eines Objekts durch Testen mehrerer Hypothesen des Quadratphasengesetzes zum Kompensieren der Restphase erfolgt, welche die Doppler-Restmigration des beweglichen Objekts charakterisiert, wobei der quadratische Term dieser Restphase anhand folgender Formel definiert wird:

$$\phi_{2,C}(t) = \frac{4\pi}{\lambda} \times \frac{\left(\vec{V} - \vec{V_c}\right)^2 - \left(\frac{\lambda \times f_dC}{2}\right)^2}{2R_c} \times t^2 ,$$

wobei

- *V*: Geschwindigkeitsvektor des Trägers
- $V_c$: Geschwindigkeitsvektor des Objekts
- $R_c$: Abstand Träger zu Objekt
- $f_dC$: Doppler-Frequenz des Objekts.

4. Verfahren nach einem der Ansprüche 2 und 3, **dadurch gekennzeichnet, dass** der dritte Schritt (83) eine Filterung der defokussierten Punkte beinhaltet.

5. Verfahren nach Anspruch 1, **dadurch gekennzeichnet, dass** der fünfte Schritt (85) die Berechnung der radialen Komponente des Geschwindigkeitsvektors des beweglichen Objekts anhand folgender Beziehung beinhaltet:

$$f_d C = \frac{2}{\lambda} \times \vec{U}_c . \left( \vec{V} - \vec{V}_c \right) = \frac{2}{\lambda} \times \vec{U}_c . \vec{V} - \frac{2}{\lambda} \times V_{cR}$$

wobei:

$V_{cR}$: Geschwindigkeitsvektorkomponente des Objekts entlang der Radialachse;
$U_c$: auf das Objekt gerichteter Einzelvektor.

**Claims**

1. A method (80) for detecting and characterizing a moving target (13; 14) on a SAR image representing the reflectivity echoes of an area illuminated by a radar beam of a platform (101) formed by a repetition of radar acquisitions (103), that comprises the following steps:

   - a first step (81) of eliminating the stationary fixed echoes with high reflectivity measured on the radar image, said first step comprising the following steps:

     - reduction of the reflectivity of the moving echoes, consisting in retaining, for each pixel of the radar image, the minimum reflectivity for the whole set of repeated radar acquisitions,
     - detection of the fixed echoes by a thresholding operation,
     - a second step (82) of reducing the integration time by extracting the central temporal illumination portion on the radar image,

   - a third step (83) of focusing the echo of the moving target by applying a correction of the range migration and the Doppler migration of the moving target on the radar image,
   - a fourth step (84) of extracting the moving target from the radar image, said fourth step comprising a thresholding operation of the pixels of the radar image,
   - a fifth step (85) of calculating the position of the target and the components of the velocity vector of the target, including at least the component projected on the route of the platform, obtained according to the following relation:

$$\phi_{2,C/M}(t) = -\frac{4\pi}{\lambda} \times \frac{V \times V_{cV}}{R_c} \times t^2 \quad - \quad \frac{\lambda \pi}{2 R_c} \left( 2 f_d M + k_{amb} \times f_r \right) \times k_{amb} \times f_r \times t^2$$

where:

   - *t* represents time;
   - $\lambda$: wavelength;
   - $R_c$: the range between said platform and said target;
   - $\varphi_{2,C/M}(t)$: the residual defocusing of said target;
   - $V_{cV}$: component of the target velocity vector along the aircraft route;

- $k_{amb}$: Doppler ambiguity rank of the target;
- $M_c$: apparent position of the target, that is to say the position of the ground point located at the same distance as the target;
- $f_dM$: Doppler frequency of the point $M_c$;
- $f_r$: repetition frequency.

2. The method according to Claim 1, **characterised in that**, in the third step (83), the range migration of a target is corrected by testing a number of possible Doppler ambiguity ranks for the target.

3. The method according to Claim 1, **characterised in that**, in the third step (83), the Doppler migration of a target is corrected by testing a number of quadratic phase law hypotheses to compensate the residual phase characterising the residual Doppler migration of the moving target, the quadratic term of this residual phase being defined by the following formula:

$$\phi_{2,C}(t) = \frac{4\pi}{\lambda} \times \frac{\left(\vec{V} - \vec{V}_c\right)^2 - \left(\frac{\lambda \times f_d C}{2}\right)^2}{2R_c} \times t^2,$$

where:

- $V$: velocity vector of the platform;
- $V_c$: velocity vector of the target;
- $R_c$: Platform-Target range;
- $f_dC$: Doppler frequency of the target.

4. The method according to either of Claims 2 and 3, **characterized in that** the third step (83) comprises filtering of the defocused points.

5. The method according to Claim 1, **characterized in that** the fifth step (85) comprises the calculation of the radial component of the velocity vector of the moving target according to the following relation:

$$f_d C = \frac{2}{\lambda} \times \vec{U}_c \cdot \left(\vec{V} - \vec{V}_c\right) = \frac{2}{\lambda} \times \vec{U}_c \cdot \vec{V} - \frac{2}{\lambda} \times V_{cR}$$

where:

$V_{cR}$: component of the target velocity vector along the radial axis;
$U_c$: unit vector pointing at the target.

FIG.1

FIG.2a

FIG.2b

35

31

34

33

30

32

FIG.3

41

44

43

40

42

FIG.4

FIG.5

FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010056159 A1
- US 5323162 A
- US 2011006944 A1
- US 2004032361 A1
- FR 2833713